# EUROPÄISCHE PATENTANMELDUNG

(11) **EP 4 311 457 A1**
(43) Veröffentlichungstag der Anmeldung: **31.01.2024**
(21) Anmeldenummer: 22187305.2
(22) Anmeldetag: 27.07.2022
(51) Int. Cl.: A47J 31/20

(54) **GETRÄNKEBEREITER**

(71) Anmelder: Schulz-Pollex, Sebastian, 38302 Wolfenbüttel (DE); Schulz-Pollex, Matthias, 38110 Braunschweig (DE)
(72) Erfinder: Schulz-Pollex, Sebastian, 38302 Wolfenbüttel (DE); Schulz-Pollex, Matthias, 38110 Braunschweig (DE)
(74) Vertreter: Gramm, Lins & Partner Patent- und Rechtsanwälte PartGmbB

(57) **Zusammenfassung**

Die Erfindung betrifft einen Getränkebereiter 1 mit einem ersten, zylindrischen, einseitig offenen Gehäuse 2, das von einem Deckel 3 verschließbar ist, und einem Stempelfilter 4 mit einer Kolbenstange 4.1, die gegenüber dem im Deckel 3 axial verschiebbar geführt ist und an ihrem einen, in das Gehäuse 2 ragenden Ende einen Teller 4.2 aufweist, wobei der Stempelfilter 4 ein zweites, napfförmiges Gehäuse 4.3 aufweist, das durch den Teller 4.2 verschließbar ist.

## Beschreibung

Die Erfindung betrifft einen Getränkebereiter mit einem ersten zylindrischen, einseitig offenen Gehäuse, das von einem Deckel verschließbar ist und einem Stempelfilter mit einer Kolbenstange, die gegenüber dem Deckel axial verschiebbar ist und an ihrem einen, in das Gehäuse ragenden Ende einen Teller aufweist und einen Stempelfilter.

Ein solcher Getränkebereiter ist beispielsweise aus der EP 2 285 255 B1 bekannt und wird unter der eingetragenen Marke FRENCH PRESS vertrieben. Mit ihm wird seit langem Kaffee zubereitet. In dem zylindrischen Glasgefäß ist ein Filterkolben verschiebbar angeordnet. Der Filterkolben umfasst eine Kolbenstange, an deren unteren Ende der Stempelfilter mit einem feinen Draht- oder Kunststoffnetz angebracht ist. Durch einen das Glasgefäß verschließenden Deckel ist die Kolbenstange hindurchgeführt. Zur Zubereitung von Kaffee werden gemahlene Kaffeebohnen in das Gefäß gegeben und mit heißem Wasser aufgegossen. Das Gemisch wird in Abhängigkeit der gewünschten Geschmacksintensität des Kaffees ruhen gelassen. Dann wird der Stempelfilter in das Glasgefäß eingesetzt und in Richtung des Gefäßbodens gedrückt. Der Stempelfilter trennt dabei den trinkfertigen Kaffee vom Trester.

Beim Brühvorgang lagern sich an der Oberfläche der Flüssigkeit Schwebeteilchen ab, die nach Beendigung des beispielsweise 4-minutigen Brühvorgangs erneut durch das bereits fertige Trinkprodukt geschoben werden. Bei diesem Durchdrück-Vorgang werden dem fertigen Getränk, das nicht zwingend Kaffee sein muss, sondern beispielsweise auch Tee sein kann, eine Vielzahl von variablen Geschmacksrichtungen mitgegeben. Der sich einstellende Geschmack ist von vielen Faktoren abhängig. Auch nach der Trennung des Trinkprodukts vom Trester steht die Flüssigkeit weiterhin im Kontakt mit der Oberfläche des Tresters, sodass weiter Geschmacksstoffe an die Flüssigkeit abgegeben werden, die den Geschmack auch nachteilig beeinflussen können.

Hiervon ausgehend liegt der Erfindung die Aufgabe zugrunde, den bekannten Getränkebereiter so zu verbessern, dass vermieden wird, dass die Flüssigkeit länger als für eine positive Geschmacksentfaltung notwendig mit dem Trester in Verbindung ist.

Zur Problemlösung zeichnet sich ein gattungsgemäßer Getränkebereiter dadurch aus, dass der Stempelfilter ein zweites napfförmiges Gehäuse aufweist, das durch den Teller verschließbar ist. Durch diese Ausgestaltung wird die Flüssigkeit wirksam vom Trester ferngehalten, sodass nach dem Verschließen des zweiten Gehäuses keine Geschmacksstoffe mehr auslaugen können.

Wenn die Kolbenstange relativ zum zweiten Gehäuse verschiebbar ist, wird das Verschließen des Gehäuses erleichtert, weil der Teller in das Gehäuse soweit hinein bzw. an das Gehäuse herangezogen werden kann, dass dieses verschlossen wird.

Wenn die Kolbenstange in einem Rohr, das fest mit dem zweiten Gehäuse verbunden ist, verschiebbar gelagert ist, ist eine einfache Lagerung im Rohr möglich. Durch das Rohr kann das mit dem Teller verschlossene Gehäuse im zylindrischen Gehäuse nach oben gezogen werden, sodass das Gehäuse die Oberfläche der Flüssigkeit nicht mehr berührt und damit ein Auslaugen des Tresters noch wirkungsvoller verhindert wird.

Wenn an dem zu dem Boden des ersten Gehäuses weisenden Ende des zweiten Gehäuses ein Filterelement angeordnet ist, das einerseits an der Innenwandung des ersten Gehäuses und andererseits an der Außenwandung des zweiten Gehäuses anliegt, wird der Stempelfilter von dem napfförmigen Gehäuse gebildet, wodurch der Aufbau vereinfacht wird.

Zusätzlich kann an dem zum Boden des ersten Gehäuses weisenden Ende des zweiten Gehäuses ein Federelement angeordnet sein, das bevorzugt eine Spiralfeder ist. Dadurch wird die Filterwirkung verbessert.

Das Filterelement kann ein mit axialen Löchern versehener Ring sein, der auf die Außenwandung des zweiten Gehäuses aufgesetzt ist oder einstückig mit der Gehäusewandung ausgeformt ist.

Ein Stempelfilter für einen vorstehend beschriebenen Getränkebereiter mit einer Kolbenstange, die an ihrem freien Ende einen Teller aufweist, zeichnet sich dadurch aus, dass die Kolbenstange axial in einem Rohr verschiebbar geführt ist, ein napfförmiges, das Rohr umgebendes Gehäuse durch den Teller verschließbar ist und ein Filterelement das napfförmige Gehäuse umgibt.

Vorzugsweise ist der Teller zumindest einseitig konvex gewölbt, wodurch seine Reinigung erleichtert wird.

Das Innere des Durchmessers des Rohres ist vorzugsweise nicht konstant, insbesondere abgestuft.

In der Wandung des Rohres kann mindestens ein Loch zur Entlüftung des napfförmigen Gehäuses vorgesehen sein, was vorteilhaft ist, wenn der Teller in Richtung des napfförmigen Gehäuses gezogen wird, um dieses zu verschließen.

Mithilfe einer Zeichnung soll ein Ausführungsbeispiel der Erfindung nachfolgend näher beschrieben werden. Es zeigen:

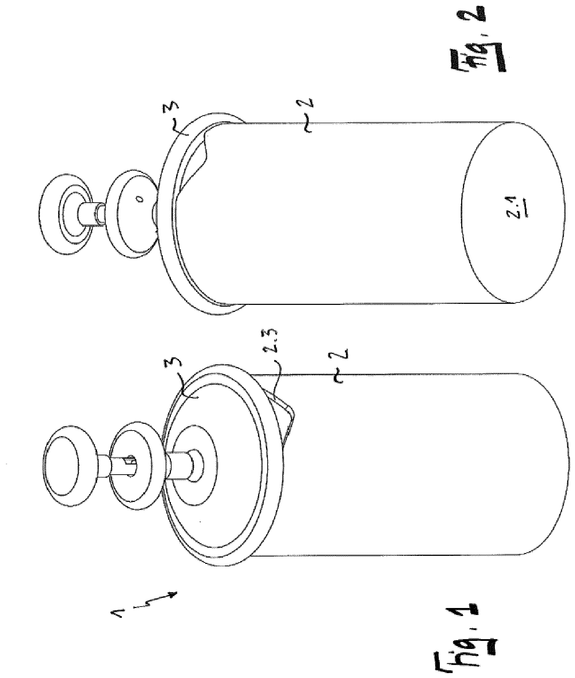

- Figur 1 -: eine perspektivische Darstellung des Getränkebereiters von oben;
- Figur 2 -: eine perspektivische Darstellung des Getränkebereiters von unten;

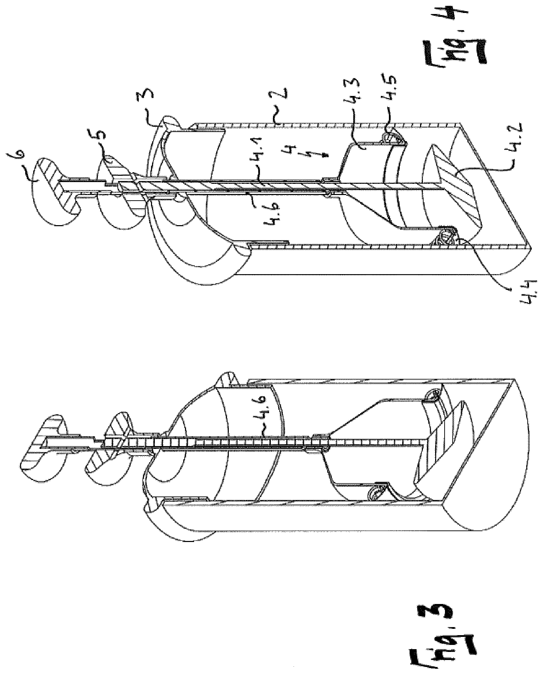

- Figur 3 -: eine erste perspektivische Schnittdarstellung des Getränkebereiters;
- Figur 4 -: eine zweite perspektivische Schnittdarstellung des Getränkebereiters;

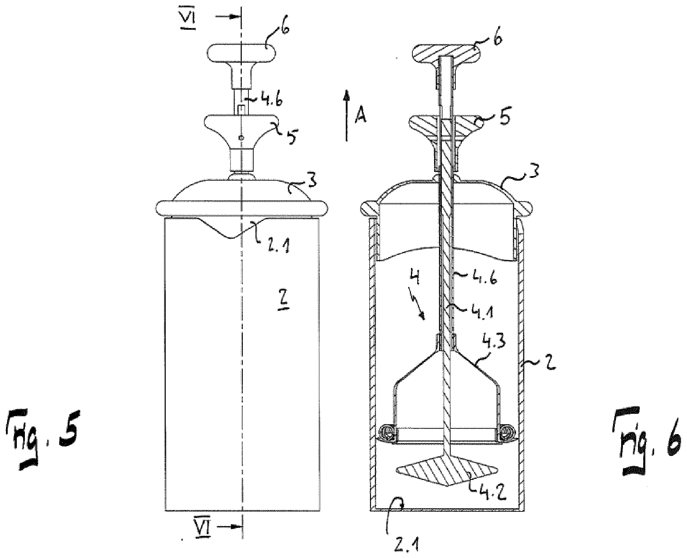

- Figur 5 -: eine Seitenansicht des Getränkebereiters;
- Figur 6 -: den Schnitt entlang der Linie VI-VI nach Figur 5;

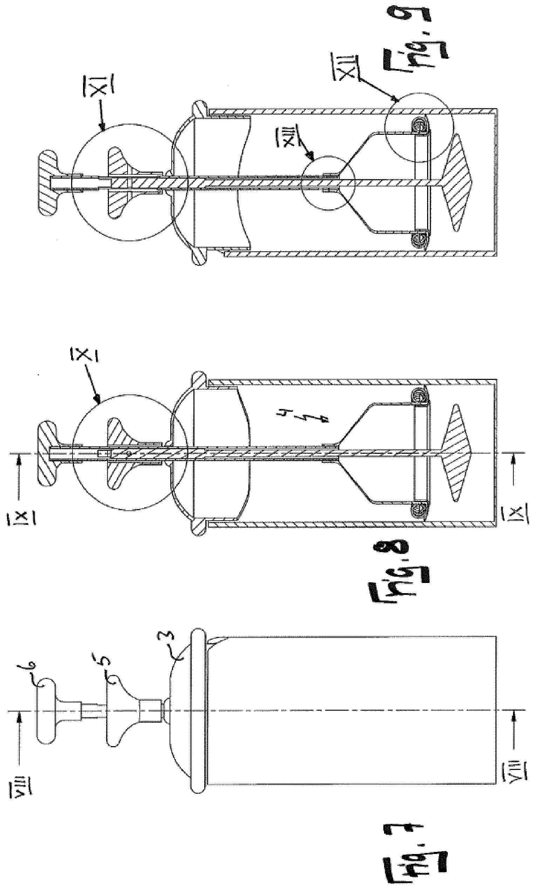

- Figur 7 -: eine Seitenansicht des Getränkebereiters;
- Figur 8 -: den Schnitt entlang der Linie VIII-VIII nach Figur 7;
- Figur 9 -: den Schnitt entlang der Linie IX-IX nach Figur 8;

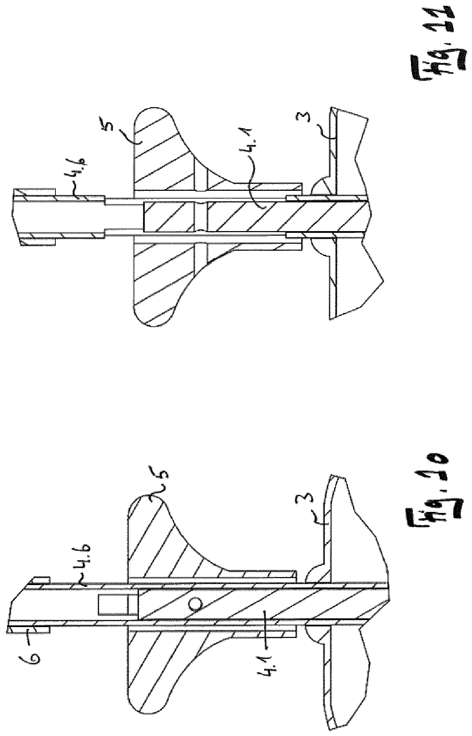

- Figur 10 -: die Einzelheit gemäß Sichtpfeil X nach Figur 8;
- Figur 11 -: die Einzelheit gemäß Sichtpfeil XI nach Figur 9;
- Figur 12 -: die Einzelheit gemäß Sichtpfeil XII nach Figur 9;
- Figur 13 -: die Einzelheit gemäß Sichtpfeil XIII nach Figur 9;

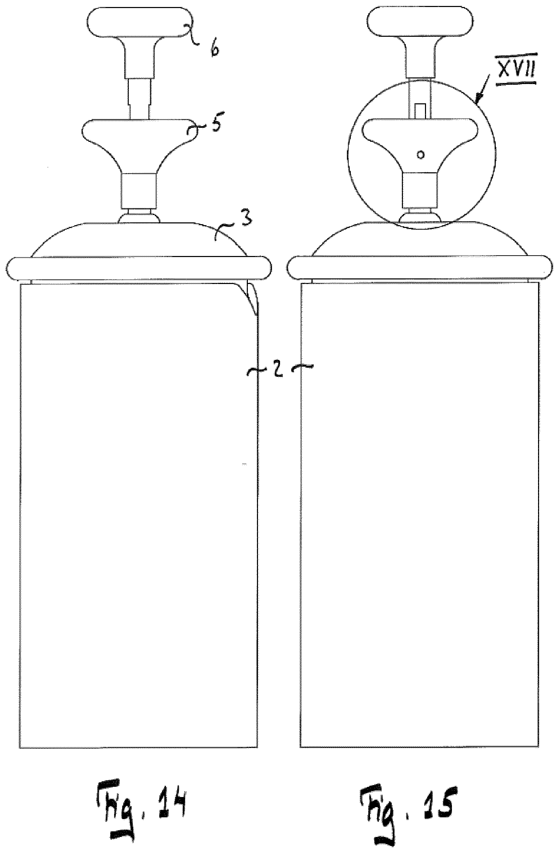

- Figur 14 -: die Seitenansicht des Getränkebereiters;
- Figur 15 -: die Seitenansicht des Getränkebereiters;
- Figur 16 -: eine Einzelheit;
- Figur 17 -: die Einzelheit gemäß Sichtpfeil XVII nach Figur 15;
- Figur 18 -: den Schnitt entlang der Linie XVIII- XVIII nach Figur 17;
- Figur 19 -: eine Einzelheit;
- Figur 20 -: die Ansicht gemäß Sichtpfeil XX nach Figur 17;
- Figur 21 -: den Schnitt entlang der Linie XXI- XXI nach Figur 20;
- Figur 22 -: den Schnitt entlang der Linie XXII- XXII nach Figur 17;
- Figur 23 -: eine Einzelheit;
- Figur 24 -: den Schnitt entlang der Linie XXIV- XXIV nach Figur 23;
- Figur 25 -: die Einzelheit nach Figur 23 in perspektivischer Schnittdarstellung;
- Figur 26 -: die perspektivische Darstellung der Einzelheit nach Figur 23 von unten;
- Figur 27 -: die perspektivische Darstellung der Einzelheit nach Figur 23 von oben;
- Figur 28 -: die Einzelheit nach Figur 29 gemäß Sichtpfeil XXVIII;
- Figur 29 -: eine Einzelheit.

Der Getränkebereiter 1 besteht im Wesentlichen aus dem zylindrischen, einseitig offenen Gehäuse 2, das beispielsweise ein Glasbehälter ist, und von einem Deckel 3 verschlossen wird. Im Inneren des Gehäuses 2 ist ein Stempelfilter 4 vorgesehen, der aus einem napfförmigen Gehäuse 4.3 dem Filterelement 4.4 und der Spiralfeder 4.5 gebildet wird. Das napfförmige Gehäuse 4.3 kann durch den Teller 4.2 verschlossen werden. Der Teller 4.2 ist am freien Ende der Kolbenstange 4.1 vorgesehen, die in einem Rohr 4.6 mit einem abgestuften Innendurchmesser geführt wird. Das Rohr 4.6 ist mit dem napfförmigen Gehäuse 4.3 fest verbunden. Hierzu kann zentral am Gehäuse 4.3 ein Flansch 4.3.2 ausgebildet sein, in dem das Rohr 4.6 befestigt wird. An dem dem Teller 4.2 gegenüberliegenden Ende ist die Kolbenstange 4.1 mit einem Knauf 5 versehen, der dazu dient, die Kolbenstange 4.1 zu ergreifen und damit die Kolbenstange 4.1 in axialer Richtung A hin und her schieben zu können. An dem dem Gehäuse 4.3 gegenüberliegenden Ende ist das Rohr 4.6 mit einem Knauf 6 versehen, der dazu dient, das Rohr 4.6 in axialer Richtung A hin und her bewegen zu können. Die beiden Knaufe 5 und 6 können gleichzeitig ergriffen werden und somit sowohl das Gehäuse 4.3 als auch der Teller 4.2 und damit der Stempelfilter 4 in axialer Richtung A hin und her bewegt werden.

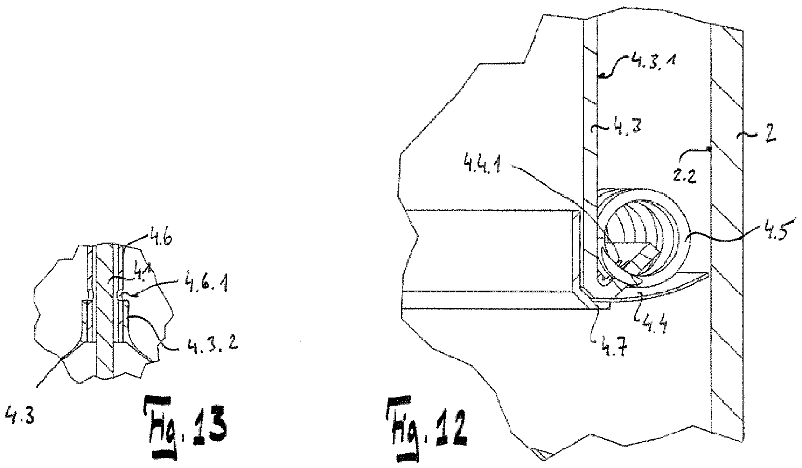

Das napf- oder glockenförmige Gehäuse 4.3 ist an seinem dem Boden 2.1 des Gehäuses 2 zugewandten Ende mit einem Filterelement 4.4 versehen, das einerseits an der Innenwandung 2.2 und andererseits an der Außenwandung 4.3.1 des Gehäuses 4.3 anliegt und mit Löchern 4.4.1 versehen ist, durch die eine Spiralfeder 4.5 hindurchgeführt ist, die zusammen mit den Löchern das Filterelement 4.4 ausbildet (vgl. Figur 12). Über einen Klemmring 4.7 wird das Filterelement 4.4 am Gehäuse 4.3 fixiert. Es kann aber auch einstückig mit dem Gehäuse 4.3 ausgebildet sein.

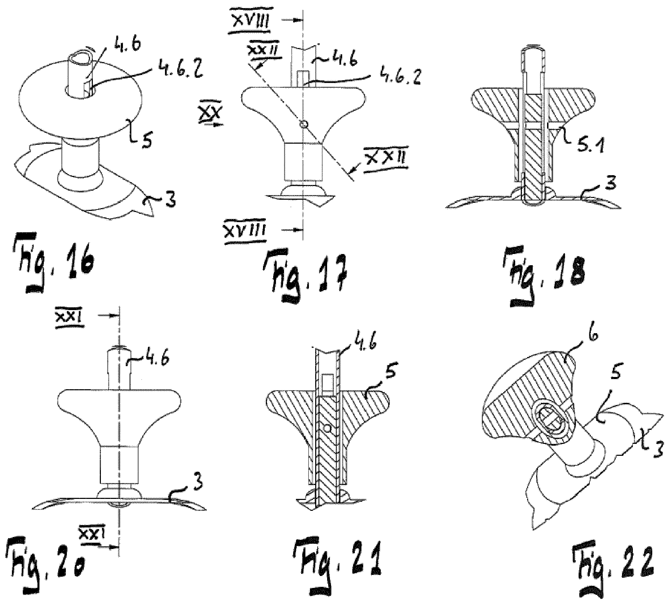

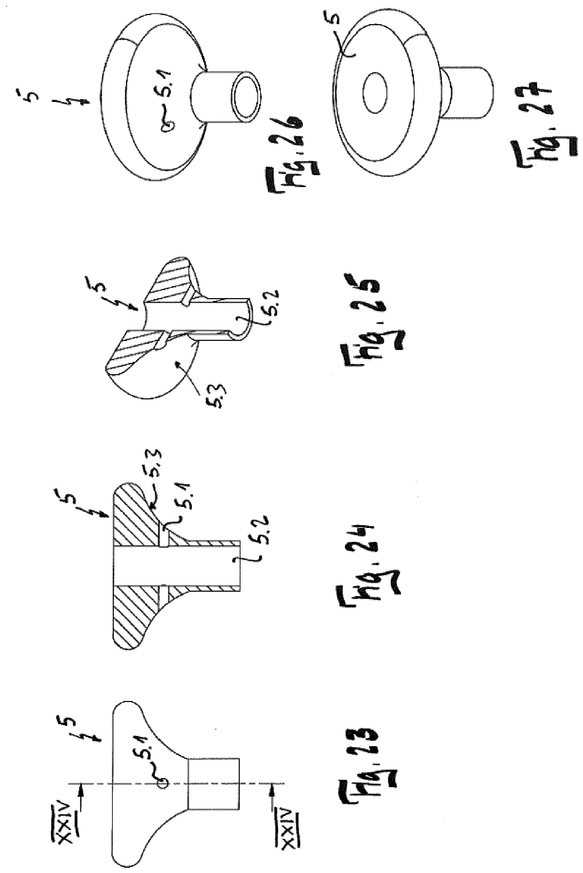

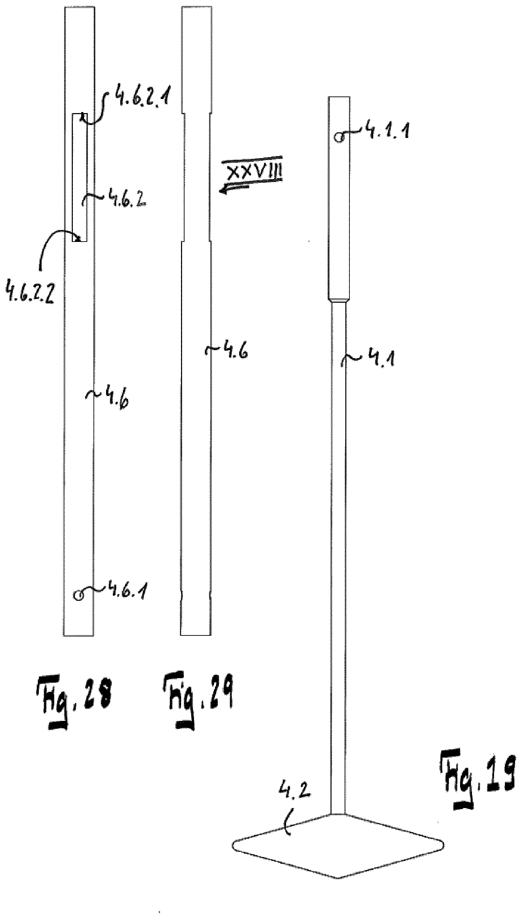

Nachfolgend soll die Mechanik zum Verschließen des Tellers 4.2 gegen das zweite Gehäuse 4.3 anhand der Figuren 16-29 erläutert werden. In dem Rohr 4.6 ist eine Aussparung 4.6.1 vorhanden. Die Kolbenstange 4.1 weist ein Loch 4.1.1 auf, das mit der Aussparung 4.6.2 in Überdeckung gebracht wird, wenn die Kolbenstange 4.1 in dem Rohr 4.6 geführt läuft. Der Knauf 5 weist eine Radialbohrung 5.1 und eine im Durchmesser größere Axialbohrung 5.2 auf. Die Radialbohrung 5.1 wird in Überdeckung mit dem Loch 4.1.1 in der Kolbenstange 4.1 gebracht und über einen Bolzen wird der Knauf 5 durch die Radialbohrung 5.1 und die Aussparung 4.6.1 mit dem Loch 4.1.1 der Kolbenstange verbunden. Der Bolzen schließt beidseitig an der Außenwand 5.3 des Knaufs 5 ab. Die Aussparung 4.6.2 wird nach oben durch die Wand 4.6.2.1 und nach unten durch die Wand 4.6.2.2 begrenzt. Die Wand 4.6.2.2 legt den Abstand fest, um den sich der Teller 4.2 von dem zweiten Gehäuse 4.3 entfernen kann, da der Bolzen dann entsprechend auf der Wand 4.6.2.2 aufliegt. In diesem Zustand kann das Getränk ziehen, wie weiter unter noch näher erläutert werden wird. Die Wand 4.6.2.1 kann durch den Bolzen nicht erreicht werden, weil der Teller 4.2 vorher gegen das zweite Gehäuse 4.3 gepresst wird. In diesem Zustand wird das verschlossene Gehäuse 4.3 durch das Wasser gepresst.

Die Funktionsweise des Getränkebereiters 1 ist wie folgt:
In das zylindrische Gehäuse 2 wird das zu extrahierende Material, beispielsweise gemahlener Kaffee oder Teeblätter in der gewünschten Menge eingefüllt und dann mit heißem Wasser aufgegossen. Wenn eine vorbestimmte Verweildauer abgelaufen ist, wird der Deckel 3, der das Filterelement 4 trägt, auf das Gehäuse 2 aufgesetzt und dieses dadurch verschlossen. Mit dem Knauf 6 wird das Rohr 4.6 und damit das Gehäuse 4.3 in Richtung des zu extrahierenden Materials verschoben und dieses zusammengepresst. Die Flüssigkeit läuft durch das Filterelement 4.4 bzw. die Spiralfeder 4.5 an dem Gehäuse 4.3 vorbei und der Trester wird in das Innere des Gehäuses 4.3 eingeführt, weil er das Federelement 4.5 nicht passieren kann. Wenn das Gehäuse 4.3 den Boden 2.1 erreicht hat, wird über den Knauf 5 der Teller 4.2 in axialer Richtung A nach oben gezogen und verschließt das Gehäuse 4.3. Damit ist der Trester in dem Gehäuse 4.3 eingekapselt und über die beiden Knaufe 5, 6 werden sowohl die Kolbenstange 4.1 als auch das Rohr 4.6 nach oben in das Gehäuse 2 gezogen und dabei über der Oberfläche der Flüssigkeit gehalten, sodass das Gehäuse 4.3 mit der Flüssigkeit nicht in Berührung kommen kann, und so ein weiteres Auslaugen des Tresters und damit ein Übergang der Bitterstoffe in die Flüssigkeit ausgeschlossen ist. Die Kolbenstange 4.1 ist in dieser Stellung dann starr mit dem Rohr 4.6 gekoppelt und somit gegenüber dem Deckel 3 fixiert.

Um das Ausgießen des Getränks zu erleichtern, ist im Gehäuse 2 eine Tülle 2.3 vorgesehen. Zur Entlüftung des Innenraumes des Gehäuses 4.3 ist im Rohr 4.6 mindestens ein Loch 4.6.1 vorgesehen.

### Bezugszeichenliste

- 1: Getränkebereiter
- 2: Gehäuse
- 2.1: Gehäuseboden
- 2.2: Innenwandung
- 2.3: Tülle
- 3: Deckel
- 4: Stempelfilter
- 4.1: Kolbenstange
- 4.1.1: Loch
- 4.2: Teller
- 4.3: Gehäuse
- 4.3.1: Außenwandung
- 4.3.2: Flansch
- 4.4: Filterelement
- 4.4.1: Löcher
- 4.5: Spiralfeder
- 4.6: Rohr
- 4.6.1: Loch
- 4.6.2: Aussparung
- 4.6.2.1: Wand
- 4.6.2.2: Wand
- 4.7: Klemmring
- 5: Knauf
- 5.1: Radialbohrung
- 5.2: Axialbohrung
- 6: Knauf

- A: axiale Richtung

## Patentansprüche

1. Getränkebereiter (1) mit einem ersten, zylindrischen, einseitig offenen Gehäuse (2), das von einem Deckel (3) verschließbar ist, und einem Stempelfilter (4) mit einer Kolbenstange (4.1), die gegenüber dem Deckel (3) axial verschiebbar ist und an ihrem einen, in das Gehäuse (2) ragenden Ende einen Teller (4.2) aufweist, **dadurch gekennzeichnet, dass** der Stempelfilter (4) ein zweites, napfförmiges Gehäuse (4.3) aufweist, das durch den Teller (4.2) verschließbar ist.

2. Getränkebereiter (1) nach Anspruch 1, **dadurch gekennzeichnet, dass** die Kolbenstange (4.1) relativ zum zweiten Gehäuse (4.3) verschiebbar ist.

3. Getränkebereiter (1) nach Anspruch 1 oder 2, **dadurch gekennzeichnet, dass** die Kolbenstange (4.1) in einem Rohr (4.6) verschiebbar gelagert ist, das mit dem zweiten Gehäuse (4.3) fest verbunden ist.

4. Getränkebereiter (1) nach Anspruch 3, **dadurch gekennzeichnet, dass** Rohr (4.6) im Deckel (3) axial verschiebbar geführt ist.

5. Getränkebereiter (1) nach einem der vorstehenden Ansprüche , **dadurch gekennzeichnet, dass** an dem zu einem Boden (2.1) des ersten Gehäuses (2) weisenden Ende des zweiten Gehäuses (4.3) ein Filterelement (4.4) angeordnet ist, das einerseits an der Innenwandung (2.2) des ersten Gehäuses (2) und andererseits an der Außenwandung (4.3.1) des zweiten Gehäuses (4.3) anliegt.

6. Getränkebereiter (1) nach Anspruch 4, **dadurch gekennzeichnet, dass** der innere Durchmesser des Rohres (4.6) nicht konstant ist.

7. Getränkebereiter (1) nach Anspruch 6, **dadurch gekennzeichnet, dass** der innere Durchmesser des Rohres (4.6) abgestuft ist.

8. Getränkebereiter (1) nach einem der vorstehenden Ansprüche, **dadurch gekennzeichnet, dass** an dem zum Boden (2.1) des ersten Gehäuses (2) weisenden Ende des zweiten Gehäuses (4.3) ein Federelement (4.5) angeordnet ist.

9. Getränkebereiter (1) nach Anspruch 8, **dadurch gekennzeichnet, dass** das Federelement (4.5) eine Spiralfeder ist.

10. Stempelfilter (4) für einen Getränkebereiter (1) nach einem der vorstehenden Ansprüche mit einer Kolbenstange (4.1), die an ihrem einen Ende einen Teller (4.2) aufweist, **gekennzeichnet durch** folgende Merkmale:
a. die Kolbenstange (4.1) axial verschiebbar ist in einem Rohr (4.6) geführt,
b. ein napfförmiges, das Rohr (4.6) umgebendes Gehäuse (4.3), das durch den Teller (4.2) verschließbar ist,
c. ein Filterelement (4.4), das das napfförmige Gehäuse (4.3) umgibt.

11. Stempelfilter (4) nach Anspruch 10, **dadurch gekennzeichnet, dass** der innere Durchmesser des Rohres (4.6) abgestuft ist.

12. Stempelfilter (4) nach Anspruch 10 oder 11, **dadurch gekennzeichnet, dass** an dem napfförmigen Gehäuse (4.3) ein Federelement (4.5) angeordnet ist.

13. Stempelfilter (4) nach Anspruch 12, **dadurch gekennzeichnet, dass** das Federelement (4.5) eine Spiralfeder ist.

14. Stempelfilter (4) nach einem der Ansprüche 10 bis 13, **dadurch gekennzeichnet, dass** der Teller (4.2) zumindest einseitig konvex gewölbt ist.

15. Stempelfilter (4) nach einem der Ansprüche 10 bis 14, **dadurch gekennzeichnet, dass** in der Wandung des Rohres (4.6) mindestens ein Loch (4.6.1) zur Entlüftung des napfförmigen Gehäuses (4.3) vorgesehen ist.

## Geänderte Patentansprüche

### Geänderte Patentansprüche gemäss Regel 137(2) EPÜ.

1. Getränkebereiter (1) mit einem ersten, zylindrischen, einseitig offenen Gehäuse (2), das von einem Deckel (3) verschließbar ist, und einem Stempelfilter (4) mit einer Kolbenstange (4.1), die gegenüber dem Deckel (3) axial verschiebbar ist und an ihrem einen, in das Gehäuse (2) ragenden Ende einen Teller (4.2) aufweist, wobei der Stempelfilter (4) ein zweites, napfförmiges Gehäuse (4.3) aufweist, **dadurch gekennzeichnet, dass** das zweite Gehäuse (4.3) durch den Teller (4.2) so verschließbar ist, dass eine Flüssigkeit in dem ersten Gehäuse (2) wirksam von einem Trester in dem zweiten Gehäuse (4.3) ferngehalten wird.

2. Getränkebereiter (1) nach Anspruch 1, **dadurch gekennzeichnet, dass** die Kolbenstange (4.1) relativ zum zweiten Gehäuse (4.3) verschiebbar ist.

3. Getränkebereiter (1) nach Anspruch 1 oder 2, **dadurch gekennzeichnet, dass** die Kolbenstange (4.1) in einem Rohr (4.6) verschiebbar gelagert ist, das mit dem zweiten Gehäuse (4.3) fest verbunden ist.

4. Getränkebereiter (1) nach Anspruch 3, **dadurch gekennzeichnet, dass** Rohr (4.6) im Deckel (3) axial verschiebbar geführt ist.

5. Getränkebereiter (1) nach einem der vorstehenden Ansprüche , **dadurch gekennzeichnet, dass** an dem zu einem Boden (2.1) des ersten Gehäuses (2) weisenden Ende des zweiten Gehäuses (4.3) ein Filterelement (4.4) angeordnet ist, das einerseits an der Innenwandung (2.2) des ersten Gehäuses (2) und andererseits an der Außenwandung (4.3.1) des zweiten Gehäuses (4.3) anliegt.

6. Getränkebereiter (1) nach Anspruch 4, **dadurch gekennzeichnet, dass** der innere Durchmesser des Rohres (4.6) nicht konstant ist.

7. Getränkebereiter (1) nach Anspruch 6, **dadurch gekennzeichnet, dass** der innere Durchmesser des Rohres (4.6) abgestuft ist.

8. Getränkebereiter (1) nach einem der vorstehenden Ansprüche, **dadurch gekennzeichnet, dass** an dem zum Boden (2.1) des ersten Gehäuses (2) weisenden Ende des zweiten Gehäuses (4.3) ein Federelement (4.5) angeordnet ist.

9. Getränkebereiter (1) nach Anspruch 8, **dadurch gekennzeichnet, dass** das Federelement (4.5) eine Spiralfeder ist.

10. Stempelfilter (4) für einen Getränkebereiter (1) nach einem der vorstehenden Ansprüche mit einer Kolbenstange (4.1), die an ihrem einen Ende einen Teller (4.2) aufweist, **gekennzeichnet durch** folgende Merkmale:
a. die Kolbenstange (4.1) axial verschiebbar ist in einem Rohr (4.6) geführt,
b. ein napfförmiges, das Rohr (4.6) umgebendes Gehäuse (4.3), das durch den Teller (4.2) so verschließbar ist, dass eine Flüssigkeit in dem Getränkebereiter (1) wirksam von einem Trester in dem napfförmigen Gehäuse (4.3) ferngehalten wird,
c. ein Filterelement (4.4), das das napfförmige Gehäuse (4.3) umgibt.

11. Stempelfilter (4) nach Anspruch 10, **dadurch gekennzeichnet, dass** der innere Durchmesser des Rohres (4.6) abgestuft ist.

12. Stempelfilter (4) nach Anspruch 10 oder 11, **dadurch gekennzeichnet, dass** an dem napfförmigen Gehäuse (4.3) ein Federelement (4.5) angeordnet ist.

13. Stempelfilter (4) nach Anspruch 12, **dadurch gekennzeichnet, dass** das Federelement (4.5) eine Spiralfeder ist.

14. Stempelfilter (4) nach einem der Ansprüche 10 bis 13, **dadurch gekennzeichnet, dass** der Teller (4.2) zumindest einseitig konvex gewölbt ist.

15. Stempelfilter (4) nach einem der Ansprüche 10 bis 14, **dadurch gekennzeichnet, dass** in der Wandung des Rohres (4.6) mindestens ein Loch (4.6.1) zur Entlüftung des napfförmigen Gehäuses (4.3) vorgesehen ist.
